# EUROPÄISCHE PATENTANMELDUNG

(11) **EP 1 561 897 A2**
(43) Veröffentlichungstag der Anmeldung: **10.08.2005**
(21) Anmeldenummer: 04024441.0
(22) Anmeldetag: 14.10.2004
(51) Int. Cl.: E06B 9/82

(54) **Bremsvorrichtung**

(30) Priorität: 04.02.2004 DE 102004005615
(71) Anmelder: Gross, Beatrix, Dipl.-Ing., 70469 Stuttgart (DE)
(72) Erfinder: Gross, Beatrix, Dipl.-Ing., 70469 Stuttgart (DE)
(74) Vertreter: Kohler Schmid Möbus

(57) **Zusammenfassung**

Die Erfindung betrifft eine Bremsvorrichtung (1), bei der radial auslenkbare Bremsmittel (11, 12), die an einem Abtriebselement (13) angeordnet sind, in einer Bremsstellung mit einem Gehäuse zusammenwirken, wobei die Bremsmittel (11, 12) bei einer Relativbewegung einer Antriebswelle (2) zu dem Abtriebselement (13) auf Grund einer Zwangsführung radial nach innen bewegt werden und die Bremsstellung verlassen.

## Beschreibung

### Stand der Technik

Die Erfindung betrifft eine Bremsvorrichtung, die mit einer Antriebswelle, insbesondere eines Elektromotors, zusammenwirkt.

Aus der DE 102 17 667 Al ist eine Bremsvorrichtung für einen einen Stator und einen Rotor mit Welle und Wellenlager aufweisenden Rollladen-, Markisen- oder Jalousien-Elektromotor bekannt geworden, die in der Nähe des einen Wellenlagers angeordnet und beim Stromlosschalten des Motors wirksam ist, wobei die Bremse als Radialbremse ausgebildet ist. Ein ringförmiger Bremsbelag ist auf der Motorwelle aufgepresst und am Stator ist ein magnetisierbarer Bremskörper verankert, der mehrere den Bremsbelag radial umfassende, schalenförmige Segmente aufweist. Diese Segmente sind von einer offenen, ringförmigen Blattfeder umspannt, wobei die Blattfeder die Segmente im Stromloszustand des Motors auf den Bremsbelag drückt.

Insbesondere Rollladen-, Markisen- oder Jalousien-Elektromotoren müssen aus Sicherheitsgründen nach ihrem Stromlosschalten schnell abgebremst werden, um einen exzessiven Nachlauf zu vermeiden. Es ist bekannt, Axialbremssysteme einzusetzen, deren Einzelteile mit einem kleinen Bremsspalt, beispielsweise 0,3 mm, auf die Welle und den Stator aufgesetzt werden. Derartige Bremsen sind relativ ungenau und brauchen axial relativ viel Platz. Sie haben eine verzögerte Bremswirkung und sind aus Bauraumgründen auf ein gewisses Drehmoment begrenzt.

### Aufgabe der Erfindung

Aufgabe der vorliegenden Erfindung ist es, eine Bremsvorrichtung zu schaffen, mit der mit hoher Widerholgenauigkeit und geringem Nachlauf gebremst werden kann.

### Gegenstand der Erfindung

Erfindungsgemäß wird diese Aufgabe dadurch gelöst, dass bei einer Bremsvorrichtung der eingangs genannten Art mindestens ein an einem Abtriebselement angeordnetes, radial verschiebliches und mit einem drehfest angeordneten Teil, insbesondere einem Gehäuse, zusammenwirkendes Bremsmittel vorgesehen ist, das in einer Ruhestellung der Antriebswelle radial gegen das Teil drückt und bei einer Drehbewegung der Antriebswelle das Abtriebselement für eine Drehbewegung freigibt. Mit einer derartigen Bremsvorrichtung lässt sich mit einer hohen Genauigkeit bremsen. Insbesondere kann das Bremsmoment eingestellt werden. Durch die radial wirkende Bremse ist es möglich, die Bremsvorrichtung platzsparend einzubauen. Es tritt nur ein geringer Nachlauf des Abtriebselements, das beispielsweise mit einer Abtriebswelle einer Jalousie oder Markise in Verbindung stehen kann, auf. Durch die Bremsvorrichtung kann daher verhindert werden, dass sich eine Jalousie beim Stromlosschalten des Motors selbsttätig abwickelt.

Besonders bevorzugt ist es, wenn das mindestens eine Bremsmittel als Bremsbacke ausgebildet ist und radial verschieblich an dem Abtriebselement angeordnet ist. Dabei kann die Größe, insbesondere die Breite der Backen variiert werden, so dass dadurch mehr Bremskraft erzeugt werden kann. Dies bedeutet, dass die Bremsvorrichtung relativ einfach an unterschiedliche Anwendungen und Anforderungen angepasst werden kann. Vorzugsweise sind zwei Bremsbacken vorgesehen, die gegenüberliegend angeordnet sind.

Bei einer besonders bevorzugten Ausführungsform ist ein Steuerelement drehfest mit der Antriebswelle verbunden und weist das Steuerelement mindestens ein Führungsmittel auf, das mit mindestens einem korrespondierenden Führungsmittel des Bremsmittels zusammenwirkt. Durch das Steuermittel kann bei einer Drehung der Antriebswelle über die Führungsmittel das Bremsmittel radial in Richtung Antriebswellenachse bewegt werden, um das Abtriebselement für eine Bewegung freizugeben. Andererseits kann durch das Steuerelement das Bremsmittel in seine Ruhestellung zurückbewegt werden, in der es bremsend wirkt und das Abtriebselement drehfest hält. Das Steuerelement kann ein separates Teil sein oder materialschlüssig mit der Antriebswelle verbunden sein. Insbesondere kann das Ende der Antriebswelle als Steuerelement ausgebildet sein.

Besonders bevorzugt ist es, wenn das Steuerelement relativ zu dem Abtriebselement verdrehbar ist. Bei einer Relativbewegung des Steuerelements zum Abtriebselement können die Führungsmittel derart zusammenwirken, dass das drehfest am Abtriebselement angeordnete Bremsmittel radial in Richtung Antriebswellenachse bewegt wird und das Abtriebselement für eine Bewegung freigibt. Da das Abtriebselement durch das Bremsmittel in der Bremsstellung drehfest gehalten ist, ergibt sich automatisch beim Anfahren des Motors eine Relativbewegung von Antriebswelle und Abtriebselement. Durch diese Relativbewegung wird das Steuerelement verdreht, so dass das Führungsmittel des Steuerelements mit dem korrespondierenden Führungsmittel des Bremsmittels zusammenwirkt und das Bremsmittel in eine Freigabestellung bewegt wird.

Eine besonders einfache Ausführungsform der Führungsmittel ergibt sich, wenn das eine Führungsmittel als bogenförmige Vertiefung und das korrespondierende Führungsmittel als in der Vertiefung geführter Zapfen ausgebildet ist. Die bogenförmige Vertiefung kann im Steuerelement oder im Bremsmittel angeordnet sein. Dies bedeutet, dass die Kontur des einen Führungsmittels so gewählt ist, dass beim relativen Verdrehen des Steuerelements zum Abtriebselement der Zapfen des anderen Elements in Richtung Wellenachse bewegt wird. Dadurch gelangt das Bremsmittel außer Eingriff mit dem feststehenden Teil, insbesondere einem Gehäuse. Hierbei ist anzumerken, dass das Gehäuse entweder ein Bremsgehäuse sein kann oder Teil eines Motorgehäuses sein kann. Dies ist insbesondere dann der Fall, wenn die Bremsvorrichtung in den Motor bzw. in das Motorgehäuse eines Elektromotors integriert ist. Die Vertiefung kann auch eine Durchgangsöffnung sein. Eine Vertiefung oder Ausnehmung hat den Vorteil, dass die Bremsmittel und das Steuerelement näher beieinander angeordnet werden können und daher die Bremsvorrichtung axial geringer dimensioniert werden kann. Andere Ausbildungen der Führungsmittel, beispielsweise als gebogener Steg, der auf das Steuerelement aufgesetzt ist und an dem ein Zapfen von unten anschlägt, sind ebenso denkbar.

Bei einer besonders bevorzugten Ausgestaltung der Erfindung ist ein zwischen dem Steuerelement und dem Abtriebselement wirkendes Rückstellelement vorgesehen. Vorzugsweise ist das Rückstellelement als elastisches Element ausgebildet. Dieses Rückstellelement wirkt einer Relativverdrehung der Abtriebswelle bzw. des Steuerelements und des Abtriebselements entgegen. Dies bedeutet, dass beim Anlaufen des Motors zunächst die Rückstellkraft des Rückstellelements überwunden wird und dann eine Verdrehung des Steuerelements gegenüber dem Abtriebselement erfolgt. Wird dagegen der Motor angehalten, so wird durch das Rückstellelement die ursprüngliche Lage des Steuerelements zu dem Abtriebselement hergestellt. Dadurch wird das mindestens eine Bremsmittel auf Grund der zusammenwirkenden Führungsmittel wieder in seine Ausgangslage zurückgestellt und erfolgt eine Bremsung.

Vorteilhafterweise ist das Rückstellelement als Blattfeder ausgebildet. Blattfedern sind besonders kostengünstig und können außerdem platzsparend angeordnet werden. Sie wirken bei der erfindungsgemäßen Bremsvorrichtung im Wesentlichen radial. Im Vergleich zu einer axial wirkenden Bremse kann daher die Bremsvorrichtung mit axial geringeren Dimensionen aufgebaut werden, da keine axial wirkende Feder vorgesehen werden muss. Durch die Blattfedern wird eine besonders große Sensibilität bzw. Genauigkeit der Bremsvorrichtung realisiert. Insbesondere ist durch unterschiedlich starke Blattfedern das Bremsmoment der Bremsvorrichtung besonders einfach einstellbar. Die Blattfedern können mit einem Mittenabschnitt in einem zur Antriebswelle parallelen Schlitz des Steuerelements angeordnet sein und mit ihren freien Enden an entsprechenden Anschlägen des Abtriebselements anliegen bzw. sich abstützen.

Bei einer vorteilhaften Ausführungsform der Erfindung ist vorgesehen, dass das Steuerelement und das Abtriebselement jeweils mindestens einen die gegenseitige Relativbewegung begrenzenden Anschlag aufweisen. Dies bedeutet, dass beim Anlaufen des Motors zunächst eine geringe Relativbewegung des Steuerelements zum Abtriebselement erfolgt. Nach dieser geringen Relativbewegung, die ausreichend ist, um das Bremsmittel außer Eingriff mit dem feststehenden Teil zu bringen, schlägt das Steuerelement am Abtriebselement an und nimmt dieses mit. Dadurch kann ein an dem Abtriebselement angeordnetes bzw. mit diesem verbundenes Element bzw. eine Abtriebswelle gedreht werden.

Vorzugsweise ist die Bremsvorrichtung bezüglich einer Mittenebene symmetrisch aufgebaut. Dabei kann insbesondere vorgesehen sein, dass die Mittenebene durch die Achse der Antriebswelle verläuft. Der symmetrische Aufbau hat zum einen den Vorteil, dass die unterschiedlichen Teile der Bremsvorrichtung einfacher zusammengebaut werden können, da auf eine Orientierung nicht geachtet werden muss. Zum anderen ist es durch den symmetrischen Aufbau möglich, die Bremse bei beiden Drehrichtungen der Antriebswelle zu lösen. Insbesondere ist die Bremse wirksam, egal in welcher Richtung die Antriebswelle gedreht wird. Dies ist insbesondere notwendig und vorteilhaft für einen Antrieb einer Jalousie, einer Markise oder eines Rollladens.

Wenn das Steuerelement und das Abtriebselement scheibenartig ausgebildet sind und das Bremsmittel zwischen dem Steuerelement und dem Abtriebselement angeordnet ist, kann die Bremsvorrichtung mit geringen axialen Ausmaßen aufgebaut werden. Dies ist insbesondere vorteilhaft, wenn für den Einbauraum eines Motors und der Bremse nur wenig Raum zur Verfügung steht.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ein Ausführungsbeispiel ist in der schematischen Zeichnung dargestellt und wird in der nachfolgenden Beschreibung erläutert. Es zeigen:
- **Fig. 1**: eine Explosionsdarstellung der Bremsvorrichtung;
- **Fig. 2**: eine perspektivische Ansicht der zusammengebauten Bremsvorrichtung im bremsenden Zustand;
- **Fig. 3**: eine perspektivische Ansicht der zusammengebauten Bremsvorrichtung im ungebremsten Zustand.

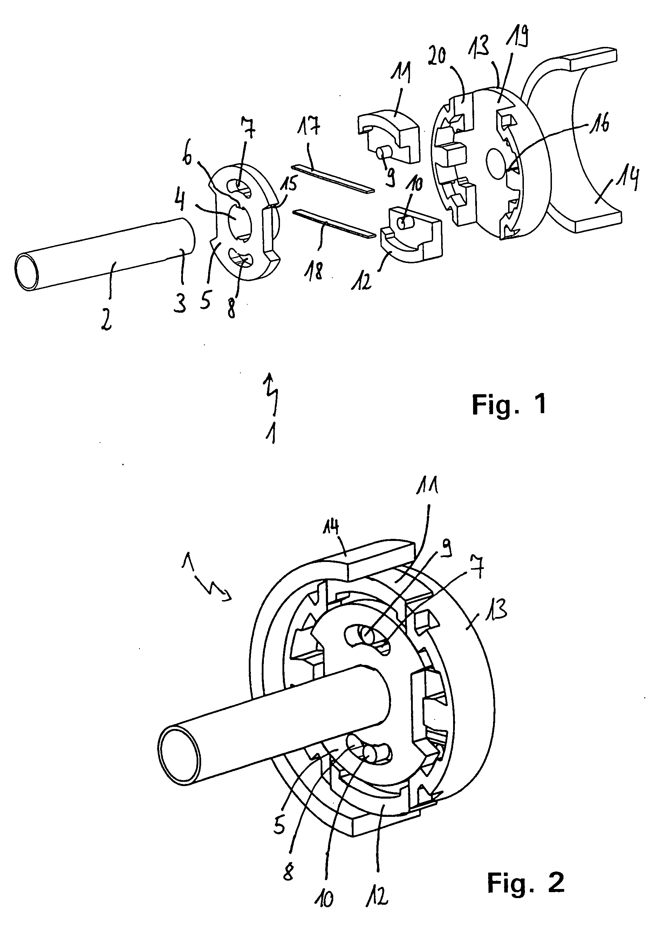

Die Bremsvorrichtung 1 der **Fig. 1** umfasst eine Antriebswelle 2, die mit ihrem freien Ende 3 in eine Öffnung 4 eines scheibenförmigen Steuerelements 5 einschiebbar ist. In der Öffnung 4 sind Vorsprünge 6 zu sehen, die mit einer Vertiefung des freien Endes 3 zusammenwirken, so dass das Steuerelement drehfest auf der Antriebswelle 2 angeordnet werden kann. Das Steuerelement 5 ist im Wesentlichen oval ausgebildet und kann daher als Ovalrad bezeichnet werden. Das Steuerelement 5 weist zwei gegenüberliegende erste Führungsmittel 7, 8 auf, die als bogenförmige Vertiefung ausgebildet sind. Die ersten Führungsmittel 7, 8 wirken mit zweiten korrespondierenden Führungsmitteln 9, 10 zusammen, die an als Bremsbacken ausgebildeten Bremsmitteln 11, 12 vorgesehen sind. Die Bremsmittel 11, 12 sind radial verschieblich in einem Abtriebselement 13, das als Abtriebsscheibe ausgebildet ist, anordenbar. Wenn die zweiten Führungsmittel 9, 10, die als Zapfen ausgebildet sind, sich jeweils mittig in den bogenförmigen Führungsmitteln 7, 8 befinden, nehmen die Bremsmittel 11, 12 eine radial äußere Position ein und drücken dabei gegen ein drehfest angeordnetes Teil 14, das als Bremsgehäuse ausgebildet ist. In der Fig. 1 ist nur eine Halbschale des Gehäuses gezeigt.

Wird die Antriebswelle 2 und damit das Steuerelement 5 relativ zum Abtriebselement 13 verdreht, werden die zweiten Führungsmittel 9, 10 in den ersten Führungsmitteln 7, 8 in eine Endposition bewegt. Die Führungsmittel 7, 8 sind derart ausgebildet, dass durch diese Bewegung der Führungsmittel 7, 8 relativ zu den Führungsmitteln 9, 10 die Bremsmittel 11, 12 radial nach innen bewegt werden, so dass sie das feststehende Teil 14 nicht mehr berühren.

An dem Steuerelement 5 sind jeweils Anschläge 15 vorgesehen, die mit Anschlägen 16 des Abtriebselements 13 zusammenwirken. Dabei sind die Anschläge 15, 16 derart angeordnet, dass die Anschläge 15, 16 sich berühren, wenn die Führungsmittel 9, 10 in den Führungsmitteln 7, 8 sich in einer Endlage befinden. In dieser Relativposition des Steuerelements 5 zum Abtriebselement 13 ist die Bremse vollständig gelöst. Von da an nimmt das Steuerelement 5 das Abtriebselement 13 in seiner Drehbewegung mit. Sobald die Antriebswelle 2 nicht mehr angetrieben wird, wird das Steuerelement 5 entgegen der Antriebsrichtung relativ zum Abtriebselement 13 verschoben. Dies geschieht durch zwei als Blattfedern ausgebildete Rückstellelemente 17, 18, die zwischen dem Steuerelement 5 und dem Abtriebselement 13 wirken. Durch die Rückstellung des Steuerelements 5 in seine ursprüngliche Lage bezogen auf das Abtriebselement 13 gelangen auch die Führungsmittel 9, 10 wieder in ihre ursprüngliche Lage in der Mitte der Führungsmittel 7, 8. Dadurch werden die Bremsmittel 11, 12 wieder radial nach außen bewegt, so dass sie gegen das feststehende Teil 14 drücken und das Abtriebselement 13 drehfest halten. Im Abtriebselement 13 ist eine Art Nut 19 ausgebildet, in der die Bremsmittel 11, 12 radial verschieblich angeordnet sind. Im bremsenden Zustand drücken die Nutflanken 20 gegen die Seiten 21 der Bremsmittel 11, 12.

In der **Fig. 2** ist die Bremsvorrichtung 1 der Fig. 1 im zusammengebauten Zustand perspektivisch dargestellt, wobei nur eine Halbschale des feststehenden Teils 14, insbesondere des Bremsgehäuses, dargestellt ist. Bei dieser Darstellung sind das Steuerelement 5 und das Abtriebselement 13 nicht relativ zueinander verdreht, so dass sich die Führungsmittel 9, 10 mittig in den Führungsmitteln 7, 8 befinden. Dies bedeutet, dass die Bremsmittel 11, 12 sich in ihrer radial äußeren Position befinden und gegen das feststehende Teil 14 drücken. Dadurch ist das Abtriebselement 13 festgestellt. Da die Bremsmittel 11, 12 das Steuerelement 5 axial übergreifen, kann die Bremsvorrichtung 1 axial kurz ausgebildet werden. Außerdem kann bei Verwendung desselben Steuerelements 5 die Bremsfläche geändert werden, indem die Bremsbacken gegen andere Bremsbacken mit anderer axialer Erstreckung des oberen Teils der Bremsbacken ausgetauscht werden.

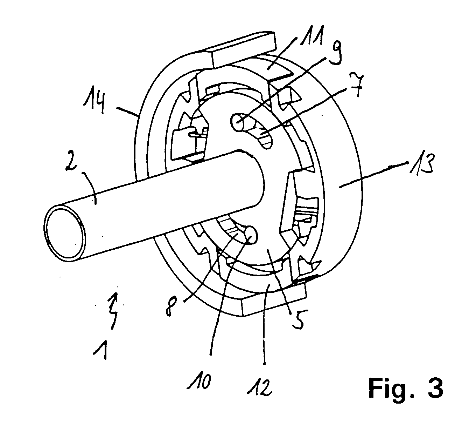

In der Darstellung der **Fig. 3** ist die Bremsvorrichtung 1 in ihrer nicht bremsenden Stellung gezeigt. Das Steuerelement 5 ist gegenüber dem Abtriebselement 13 relativ verdreht, so dass das Steuerelement 5 an dem Abtriebselement 13 anschlägt und dieses mitnimmt. Auf Grund der Verdrehung des Steuerelements gegenüber dem Abtriebselement sind die Führungsmittel 9, 10 in den Führungsmitteln 7, 8 in eine Endlage bewegt worden, wodurch die Bremsmittel 11, 12 radial zur Antriebswellenachse hin bewegt wurden. In dieser Stellung sind die Bremsmittel 11, 12 nicht in Berührung mit dem feststehenden Teil 14, so dass das Abtriebselement 13 durch die Antriebswelle 2 mitgenommen werden kann. Es versteht sich, dass das Steuerelement 5 auch in eine gegensinnige Drehrichtung hätte ausgelenkt werden können. Auf Grund des symmetrischen Aufbaus der Bremsvorrichtung 1 würden die Bremsmittel 11, 12 auch bei dieser Relativbewegung des Steuerelements 5 zum Abtriebselement 13 radial nach innen bewegt und würde die Bremswirkung aufgehoben. Durch die Rückstellelemente wird jeweils die ursprüngliche Orientierung des Steuerelements 5 zum Abtriebselement 13 hergestellt, wenn die Antriebswelle 2 nicht mehr angetrieben wird, d.h. der die Antriebswelle 2 antreibende Elektromotor stromlos geschaltet ist.

Die Erfindung betrifft eine Bremsvorrichtung 1, bei der radial auslenkbare Bremsmittel 11, 12, die an einem Abtriebselement 13 angeordnet sind, in einer Bremsstellung mit einem Gehäuse zusammenwirken, wobei die Bremsmittel 11, 12 bei einer Relativbewegung einer Antriebswelle 2 zu dem Abtriebselement 13 auf Grund einer Zwangsführung radial nach innen bewegt werden und die Bremsstellung verlassen.

## Patentansprüche

1. Bremsvorrichtung (1), die mit einer Antriebswelle (2), insbesondere eines Elektromotors zusammenwirkt, **dadurch gekennzeichnet, dass** mindestens ein an einem Abtriebselement (13) angeordnetes, radial verschiebliches und mit einem drehfest angeordneten Teil (14), insbesondere einem Gehäuse, zusammenwirkendes Bremsmittel (11, 12) vorgesehen ist, das in einer Ruhestellung der Antriebswelle (2) radial gegen das Teil (14) drückt und bei einer Drehbewegung der Antriebswelle (2) das Abtriebselement (13) für eine Drehbewegung freigibt.

2. Bremsvorrichtung nach Anspruch 1, **dadurch gekennzeichnet, dass** das mindestens eine Bremsmittel (11, 12) als Bremsbacke ausgebildet ist und radial verschieblich an dem Abtriebselement (14) angeordnet ist.

3. Bremsvorrichtung nach einem der vorhergehenden Ansprüche, **dadurch gekennzeichnet, dass** ein Steuerelement (5) drehfest mit der Antriebswelle (2) verbunden ist und mindestens ein Führungsmittel (7, 8) aufweist, das mit mindestens einem korrespondierenden Führungsmittel (9, 10) des Bremsmittels (11, 12) zusammenwirkt.

4. Bremsvorrichtung nach Anspruch 3, **dadurch gekennzeichnet, dass** das Steuerelement (5) relativ zu dem Abtriebselement (13) verdrehbar ist.

5. Bremsvorrichtung nach Anspruch 3 oder 4, **dadurch gekennzeichnet, dass** das eine Führungsmittel (7, 8) als bogenförmige Vertiefung und das korrespondierende Führungsmittel (9, 10) als in der Vertiefung geführter Zapfen ausgebildet ist.

6. Bremsvorrichtung nach einem der vorhergehenden Ansprüche, **dadurch gekennzeichnet, dass** mindestens ein zwischen dem Steuerelement (5) und dem Abtriebselement (13) wirkendes Rückstellelement (17, 18) vorgesehen ist.

7. Bremsvorrichtung nach Anspruch, **dadurch gekennzeichnet, dass** das Rückstellelement (17, 18) als Blattfeder ausgebildet ist.

8. Bremsvorrichtung nach einem der vorhergehenden Ansprüche 4 bis 7, **dadurch gekennzeichnet, dass** das Steuerelement (5) und das Abtriebselement (13) jeweils mindestens einen die gegenseitige Relativbewegung begrenzenden Anschlag (15, 16) aufweisen.

9. Bremsvorrichtung nach einem der vorhergehenden Ansprüche, **dadurch gekennzeichnet, dass** die Bremsvorrichtung (1) bezüglich einer Mittenebene symmetrisch aufgebaut ist.

10. Bremsvorrichtung nach einem der vorhergehenden Ansprüche, **dadurch gekennzeichnet, dass** das Steuerelement (5) und das Abtriebselement (13) scheibenartig ausgebildet sind und das Bremsmittel (11, 12) zwischen dem Steuerelement (5) und dem Abtriebselement (13) angeordnet ist.
